# EUROPEAN PATENT SPECIFICATION

(11) **EP 4 484 966 B1**
(45) Date of publication and mention of the grant of the patent: **30.09.2026**
(21) Application number: 24184510.6
(22) Date of filing: 26.06.2024
(51) Int. Cl.: G01N 35/10, B01L 3/02, B08B 3/12

(54) **SAMPLE ANALYZER COMPRISING ULTRASONIC CLEANING APPARATUS**
PROBENANALYSEGERÄT, UMFASSEND ULTRASCHALLREINIGUNGSVORRICHTUNG
ANALYSEUR D'ÉCHANTILLONS COMPRENANT APPAREIL DE NETTOYAGE PAR ULTRASONS

(30) Priority: 30.06.2023 CN 202310804245; 11.05.2024 CN 202410585960
(43) Date of publication of application: 01.01.2025
(73) Proprietor: Shenzhen Mindray Bio-Medical Electronics Co., Ltd., Shenzhen, Guangdong 518057 (CN)
(72) Inventor: LI, Chengjie, Shenzhen, 518057 (CN); WANG, Yun, Shenzhen, 518057 (CN); ZHOU, Yang, Shenzhen, 518057 (CN); CHENG, Jiao, Shenzhen, 518057 (CN); CHEN, Yu, Shenzhen, 518057 (CN)
(74) Representative: KIPA AB

(56) References cited:
- WO-A1-2023/032435
- JP-A- 2007 125 516
- US-A1- 2002 163 990
- US-A1- 2021 053 094
- US-A1- 2024 369 588
- US-B2- 8 936 032

## Description

### CROSS-REFERENCE TO RELATED APPLICATION

This application is filed based on and claims priority to Chinese Patent application No. 202310804245.9 filed on June 30, 2023.

### TECHNICAL FIELD

The present invention relates to the field of in-vitro diagnostic medical technology, and in particular to a sample analyzer.

### BACKGROUND

A sample analyzer is equipped with an ultrasonic cleaning tank and an ultrasonic generator. An ultrasonic emitter applies ultrasonic waves with a certain frequency and power to cleaning liquid in the cleaning tank, and micro-bubbles existing in the cleaning liquid vibrate under an action of a sound field. When a sound pressure reaches a certain value, the bubbles rapidly expand and then collapse rapidly. When cavitation bubbles collapse, small jets and shock waves are produced, and physical and chemical effects such as high temperature, high pressure, luminescence and discharge are produced around the jets and shock waves. Utilizing the impact effects produced by the ultrasonic cavitation process, contaminants may be stripped from surfaces of a workpiece being cleaned, and the contaminants may be destroyed and dispersed into the cleaning liquid in the cleaning tank. In the related art, the surface of a pipette needle cannot be cleaned uniformly. Patent applications US 2021/053094 A1, WO 2023/032435 A1, US 8936032B2, US 2002/163990 A1 and JP 2007125516 A provide teachings related to the technical field of the application.

### SUMMARY

In view of this, the embodiments of the present invention aim to provide a sample analyzer, so that the surface of the pipette needle can be cleaned uniformly.

The features of the sample analyzer according to the present invention are defined in the independent claim, and the preferable features according to the present invention are defined in the dependent claims.

In order to achieve the above purpose, an embodiment of the present invention provides a sample analyzer as set forth in claim 1.

In the embodiment of the present invention, since the pipette needle is inserted into the cleaning channel through the opening in the second direction for cleaning, the ultrasonic wave emitted from the end surface of the vibration end can better act on one side of the pipette needle facing the end surface of the vibration end, so that the side of the pipette needle facing the end surface of the vibration end can be cleaned better. The ultrasonic wave emitted from the end surface of the vibration end in the first direction is transmitted to the ultrasonic reflector through the cleaning liquid, the ultrasonic reflector reflects the ultrasonic wave, and the ultrasonic wave reflected by the ultrasonic reflector can better act on another side of the pipette needle away from the end surface of the vibration end. Therefore, both surfaces of the side of the pipette needle facing the end surface and of the side of the pipette needle away from the end surface can be cleaned more uniformly.

In the embodiment of the present invention, since the pipette needle is inserted into the cleaning channel through the opening for cleaning, the ultrasonic wave emitted from the end surface of the vibration end can better act on one side of the pipette needle facing the end surface of the vibration end, so that the side of the pipette needle facing the end surface of the vibration end can be cleaned better. At least part of the ultrasonic wave emitted from the end surface of the vibration end is transmitted to the ultrasonic reflector through the cleaning liquid, the ultrasonic reflector reflects the ultrasonic wave, and the ultrasonic wave reflected by the ultrasonic reflector can better act on another side of the pipette needle away from the end surface of the vibration end. Therefore, both the surfaces of the side of the pipette needle facing the end surface and of the side of the pipette needle away from the end surface can be cleaned more uniformly.

### BRIEF DESCRIPTION OF THE DRAWINGS

FIG. 1 is a simplified schematic diagram of a sample analyzer according to an embodiment of the present invention;
FIG. 2 is a schematic diagram of an ultrasonic cleaning apparatus and a pipette needle according to an embodiment of the present invention;
FIG. 3 is a schematic diagram of an ultrasonic cleaning apparatus according to another embodiment of the present invention;
FIG. 4 is a schematic diagram of an ultrasonic cleaning apparatus according to yet another embodiment of the present invention; and
FIG. 5 is a schematic diagram of an ultrasonic generator according to an embodiment of the present invention.

Description of reference signs in the drawings.
Sample unit 11; Sample dispensing mechanism 12; Reagent unit 13; Reagent dispensing mechanism 14; Mixing mechanism 15; Reaction component 16; Optical measurement component 17;
Ultrasonic cleaning apparatus 200;
Ultrasonic generator 21; Ultrasonic transducer 211; Concave ring 2111; Vibration part 212; End surface 212a of the vibration end; Section 212b; Arc surface 212c; and
Cleaning tank 22; Liquid storage chamber 221; First discharge port 221a; First bottom 2215; Second bottom 2214; First overflow chamber 222; Second overflow chamber 223; Second discharge ports 222a, 223a; First side wall 2211; Second side wall 2212; Third side wall 2213; Overflow port 221c; First sealing ring 231; Second sealing ring 232; Flange 233; Screw 24; Ultrasonic reflector 35; Ultrasonic reflecting surface 351; First installation port 33; Second installation port 34; Cleaning channel 31; and Pipette needle 4.

### DETAILED DESCRIPTION

In order to make the purpose, technical solutions and advantages of the present invention clearer, further detailed description of the present invention will be provide below with reference to the drawings and embodiments. It should be understood that the specific embodiments described herein are merely used to explain the present invention and are not intended to limit the present invention.

The various specific technical features described in the specific embodiments may be combined in any suitable manner without contradiction, for example, different combinations of the specific technical features may form different embodiments and technical solutions. In order to avoid unnecessary repetition, the various possible combinations of the specific technical features of the present invention will not be further described separately.

In the following description, the term "first\second\..." is only used to distinguish different objects, and does not indicate that there are similarities or connections between the objects. It should be understood that the orientation descriptions "above", "below", "outside" and "inside" involved are all orientations in the normal use state, and the directions "left" and "right" indicate the left direction and the right direction indicated in the specific corresponding schematic diagrams. The left direction and the right direction may or may not be the left direction and the right direction in the normal use state.

It should be noted that the terms "include", "contain" or any other variants thereof are intended to cover non-exclusive inclusion, so that a process, method, article or apparatus that includes a set of elements includes not only those elements, but also other elements not explicitly listed, or elements that are inherent to such a process, method, article or apparatus. In the absence of further limitations, elements defined by the phrase "includes one..." do not exclude the presence of additional identical elements in the process, method, article or apparatus that includes that element.

An embodiment of the present invention provides a sample analyzer.

A specific type of the sample analyzer is not limited, for example, the sample analyzer may be an immunoassay analyzer, a biochemical analyzer, a coagulation analyzer, or a hemorheology analyzer, etc.

Before specifically describing the present invention, an exemplary description of the structure of the sample analyzer is provided.

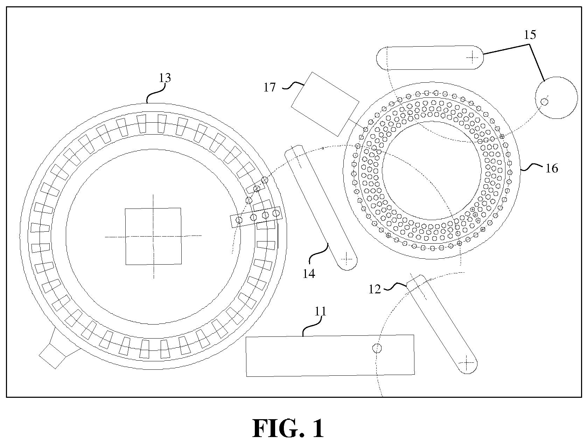

Referring to FIG. 1, the sample analyzer may include a sample unit 11, a sample dispensing mechanism 12, a reagent unit 13, a reagent dispensing mechanism 14, a mixing mechanism 15, a reaction component 16, and an optical measurement component 17, etc.

The sample unit 11 is configured to carry samples. The sample unit 11 may be a sample tray including multiple sample positions for placing samples such as sample tubes. By rotating the tray structure of the sample tray, the sample tray may dispatch one of the samples to a corresponding position, for example, a position for the sample dispensing mechanism 12 to aspirate the sample.

The sample dispensing mechanism 12 is configured to aspirate the sample and discharge the sample into a reaction cup to which a sample is to be put. The sample dispensing mechanism 12 is equipped with a sample needle. The sample needle moves to aspirate the sample carried by the sample unit 11, and then moves to the reaction cup to which the sample is to be put, so as to discharge the sample to the reaction cup to which the sample is to be put.

The reagent unit 13 is configured to carry reagents. In an embodiment, the reagent unit 13 may be a reagent tray, the reagent tray is arranged in a disk-shaped structure, and has multiple positions for carrying reagent containers. The reagent unit 13 may be rotated and drive the reagent containers carried by the reagent unit 13 to rotate, to allow one of the reagent containers to be rotated to a specific position, for example, a position where the reagent dispensing mechanism 14 aspirates the reagent. The reagent unit 13 may include one or more reagent units.

The reagent dispensing mechanism 14 is configured to aspirate a reagent and discharge the reagent into a reaction cup to which a reagent is to be put. The reagent dispensing mechanism 14 is equipped with a reagent needle. The reagent needle moves to aspirate the reagent carried by the reagent unit 13, and then moves to the reaction cup to which the reagent is to be put, so as to discharge the reagent to the reaction cup to which the reagent is to be put.

The mixing mechanism 15 is configured to mix reaction liquids to be mixed in the reaction cup. For example, the mixing mechanism 15 is equipped with a stirring rod, and the stirring rod is configured to stir and homogenize the reaction liquids to be mixed in the reaction cup.

The mixing mechanism 15 may include one or more mixing mechanisms.

The reaction component 16 has at least one placement position configured to place at least one reaction cup and incubate reaction liquid in the at least one reaction cup. For example, the reaction component 16 may be a reaction tray arranged in a disk-shaped structure, the reaction tray has one or more placement positions configured to place one or more reaction cups, the reaction tray may be rotated and drive the one or more reaction cups in the one or more placement positions to rotate, thus dispatching the one or more reaction cups in the reaction tray and incubate one or more reaction liquids in the one or more reaction cups.

The optical measurement component 17 is configured to perform an optical measurement on the incubated reaction liquid, so as to obtain reaction data of the sample. For example, the optical measurement component 17 detects a luminescence intensity of a reaction liquid to be measured, and calculates a concentration of a component to be measured in the sample through a calibration curve. In an embodiment, the optical measurement component 17 is arranged separately outside the reaction component 16.

It should be noted that an optical measurement analysis may be an immunoassay analysis, a biochemical analysis, a coagulation analysis, or a hemorheology analysis, etc.

The specific type of the sample is not limited. The sample may be body fluid such as serum, blood, plasma, medullary liquid, urine, gastric juice, intestinal juice, bile, saliva, tear, etc., or solution derived from a biological organism such as cell extract, etc., or the sample may be solution used in medical treatment such as dialysate, infusion, nutrient, pharmaceutical, etc.

In order to avoid cross-contamination of samples/reagents, the sample needles/reagent needles are cleaned after aspirating and discharging operations are completed, and next aspirating and discharging operations can only be performed after the cleaning is completed.

A sample analyzer according to an embodiment of the present invention includes a dispensing mechanism, a liquid pathway support mechanism, and an ultrasonic cleaning apparatus 200.

The dispensing mechanism includes a pipette needle 4 configured to aspirate or discharge target liquid, where the target liquid includes at least one of a sample or a reagent.

The ultrasonic cleaning apparatus 200 includes an ultrasonic generator 21, a cleaning tank 22 and an ultrasonic reflector 35.

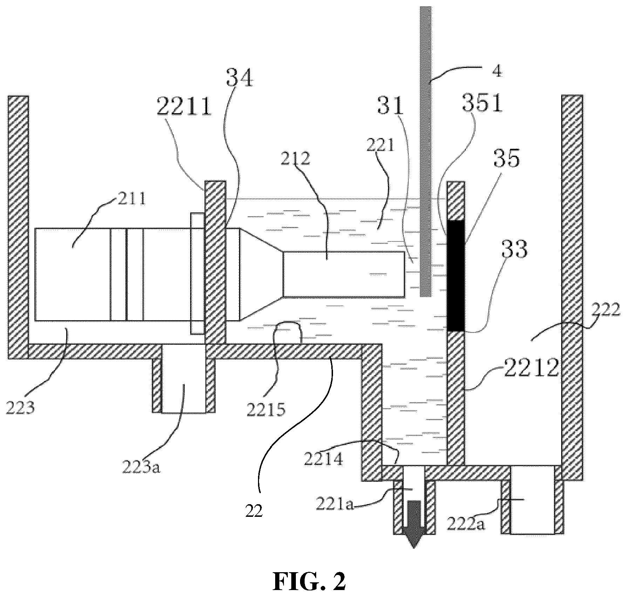

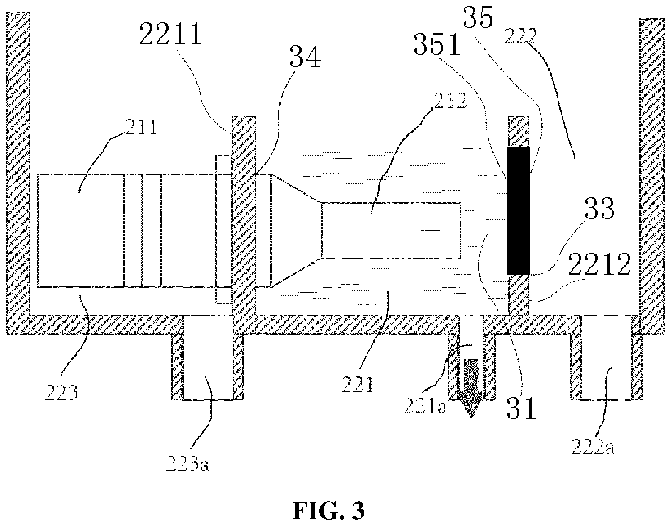

Referring to FIG. 1 to FIG. 4, the ultrasonic generator 21 includes an ultrasonic transducer 211 and a vibration part 212 connected with each other. The vibration part 212 may be understood as an amplitude transformer, which may amplify the particle displacement or velocity of the mechanical vibration of the ultrasonic transducer 211, and concentrate the ultrasonic energy on the end surface 212a of the vibration end of the vibration part 212 away from the ultrasonic transducer 211.

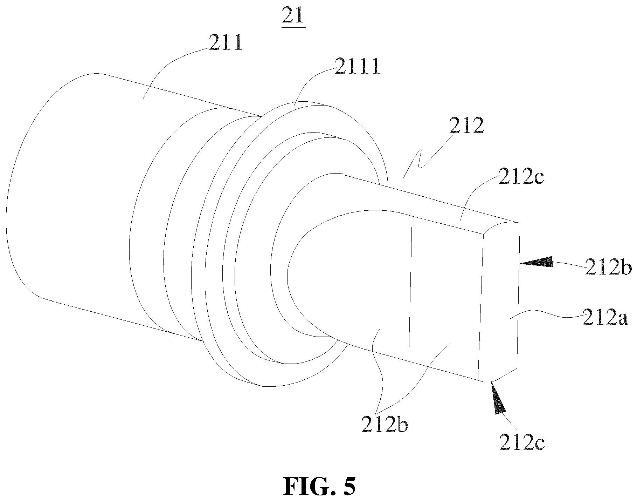

Referring to FIG. 1 to FIG. 5, the cleaning tank 22 includes a liquid storage chamber 221 configured to store cleaning liquid, and the liquid storage chamber 221 is arranged with an opening. The pipette needle 4 passes through the opening and enters the liquid storage chamber 221 for cleaning. The liquid pathway support mechanism is configured to provide the cleaning liquid to the liquid storage chamber 221.

Referring to FIG. 1 to FIG. 5, a vibration end of the vibration part 212 away from the ultrasonic transducer 211 is inserted into the liquid storage chamber 221. The end surface 212a of the vibration end is configured to emit an ultrasonic wave into the liquid storage chamber 221.

In the related art, the ultrasonic emitting surface (i.e., the end surface of the vibration end) is beside one side of the pipette needle in the radial direction of the pipette needle. When the pipette needle passes through the opening and enters the liquid storage chamber for cleaning, the side of the pipette needle, that faces the end surface of the vibration end in the radial direction of the pipette needle, may be impacted by the ultrasonic wave and may be cleaned better. However, the side of the pipette needle, that is away from the end surface of the vibration end in the radial direction of the pipette needle, is blocked by the pipette needle itself, so that the effect of the ultrasonic wave is weak, and the ultrasonic wave emitted from the end surface of the vibration end may hardly reach the side of the pipette needle, that is away from the end surface of the vibration end in the radial direction of the pipette needle. Therefore, the side of the being-cleaned pipette needle entering into the liquid storage chamber through the opening, that faces the end surface of the vibration end in the radial direction of the pipette needle, can be better cleaned by the ultrasonic wave emitted from the end surface of the vibration end; and it is difficult for the ultrasonic wave emitted from the end surface of the vibration end to reach the side of the being-cleaned pipette needle entering into the liquid storage chamber through the opening, that is away from the end surface of the vibration end in the radial direction of the pipette needle, resulting in a poor cleaning effect on this side of the being-cleaned pipette needle, and surfaces of two sides of the pipette needle in the radial direction of the pipette needle cannot be cleaned uniformly.

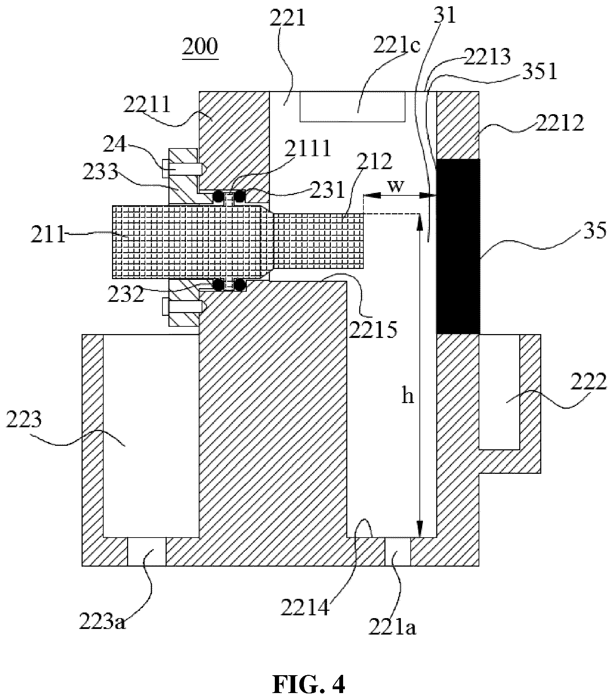

In the present invention, referring to FIG. 1 to FIG. 5, the ultrasonic reflector 35 is arranged in the liquid storage chamber 221, and the ultrasonic reflector 35 and the vibration part 212 are arranged separately, that is, the ultrasonic reflector 35 is not in contact with the vibration part 212, and the ultrasonic reflector 35 would not emit the ultrasonic wave to the cleaning liquid. The end surface 212a of the vibration end faces and is spaced apart from the ultrasonic reflecting surface 351 of the ultrasonic reflector 35 in a first direction, to allow the ultrasonic reflecting surface 351 of the ultrasonic reflector 35 to reflect the ultrasonic wave generated by the vibration end in the first direction, and the cleaning channel 31 communicated with the opening is formed between the vibration end and the ultrasonic reflector 35 in the second direction, to allow the pipette needle 4 to be inserted into the cleaning channel 31 through the opening in the second direction for cleaning. Herein, the first direction is perpendicular to the second direction. Exemplarily, taking FIG. 4 as an example, the first direction is roughly the left-right direction on the paper of FIG. 4, and the second direction is roughly the up-down direction on the paper of FIG. 4.

In the embodiment of the present invention, since the pipette needle 4 is inserted into the cleaning channel 31 through the opening in the second direction for cleaning, the ultrasonic wave emitted from the end surface 212a of the vibration end may better act on the side of the pipette needle facing the end surface 212a of the vibration end, so that the side of the pipette needle 4 facing the end surface 212a of the vibration end may be better cleaned. The ultrasonic wave emitted from the end surface 212a of the vibration end in the first direction is transmitted to the ultrasonic reflector 35 through the cleaning liquid, the ultrasonic reflector 35 reflects the ultrasonic wave, and the ultrasonic wave reflected by the ultrasonic reflector 35 may better act on the side of the pipette needle 4 away from the end surface 212a of the vibration end. Therefore, both the surfaces of the side of the pipette needle 4 facing the end surface and of the side of the pipette needle 4 away from the end surface can be cleaned more uniformly.

Furthermore, by utilizing the ultrasonic reflector 35 to reflect the ultrasonic wave, the reflected ultrasonic wave cleans the surface of the side of the pipette needle 4 away from the end surface 212a of the vibration end. The ultrasonic reflector 35 may further function as an ultrasonic emitter. For example, in some comparative examples, two ultrasonic emitters are arranged opposite to each other at an interval, the pipette needle is placed between end surfaces of the two ultrasonic emitters for cleaning; however, this solution consumes more energy, has a complicated structure and a high cost. In contrast, in the embodiment of the present invention, the combination of one ultrasonic generator 21 and one ultrasonic reflector 35 enables a more comprehensive cleaning of the circumferential surfaces of the pipette needle with a relatively low energy consumption; the design has a simple structure, a low energy consumption, and a low cost, making it more conducive to productization.

In the embodiment of the present invention, the vibration part 212 directly transfers the ultrasonic vibration to the cleaning liquid, and no ultrasonic vibration is required on the tank walls of the cleaning tank 22. Therefore, the stress condition of the tank walls of the cleaning tank 22 may be improved, the requirements for the fatigue resistance strength and structure strength of the tank walls of the cleaning tank 22 may be reduced, and the input-output conversion efficiency of the ultrasonic wave is higher.

When the cleaning liquid in the cleaning tank 22 needs to be discharged, in some embodiments, the cleaning liquid may be discharged through the opening by using a pump and an aspiration pipeline.

In other embodiments, the liquid storage chamber 221 is arranged with a first discharge port 221a, and when the cleaning liquid in the liquid storage chamber 221 needs to be discharged, the cleaning liquid in the liquid storage chamber 221 may be discharged from the first discharge port 221a. For example, the first discharge port 221a is arranged at a lowest position of a bottom of the liquid storage chamber 221, facilitating the emptying of the cleaning liquid in the liquid storage chamber 221.

The ultrasonic wave is a longitudinal wave, and the end surface 212a of the vibration end of the vibration part 212 is an ultrasonic wave emitting surface. The energy density of the ultrasonic energy field is relatively high and the sound field is more concentrated at the end surface 212a of the vibration end. Therefore, when the pipette needle 4 is in the cleaning channel 31 between the end surface 212a of the vibration end and the ultrasonic reflecting surface 351, a better cleaning effect can be realized.

The way in which the liquid pathway support mechanism provides the cleaning liquid to the liquid storage chamber 221 is not limited.

For example, in some embodiments, the liquid pathway support mechanism includes a water tank connected to the pipette needle 4 through a water supply pipeline, a water pump and a syringe are connected to the water supply pipeline, an electromagnetic valve is connected between the syringe and the water pump, the syringe is connected to a driving motor, the driving motor drives the piston of the syringe to move, enabling the pipette needle 4 to aspirate and discharge the liquid under the power provided by the syringe.

Specifically, when it needs to be aspirate the target liquid, the electromagnetic valve is closed, and the aspiration and discharge of the target liquid by the pipette needle 4 is realized through the movement of the piston of the syringe. When the pipette needle 4 needs to be cleaned, the electromagnetic valve is opened, and the water pump pumps water into the water supply pipeline, to allow the water to be continuously discharged from the pipette needle 4, and the cleaning liquid is discharged into the liquid storage chamber 221 through the pipette needle 4. This process may further perform preliminary cleaning on the inner walls of the pipette needle 4.

In this embodiment, the pipette needle 4 is reused, that is, the pipette needle 4 is configured not only to aspirate and discharge the target liquid, but also to inject the cleaning liquid into the liquid storage chamber 221, which may help simplify the structure of the sample analyzer and reduce the cost.

In other embodiments, the liquid pathway support mechanism may inject the liquid into the liquid storage chamber 221 without the pipette needle 4, for example, the liquid may be injected into the liquid storage chamber 221 through components such as a pipeline and a nozzle.

The cleaning tank 22 includes tank walls, and the tank walls form the liquid storage chamber 221.

One of the tank walls is arranged with a first installation port 33, the first installation port 33 penetrates through the tank wall of the liquid storage chamber 221, and the ultrasonic reflector 35 is installed at the first installation port 33, to allow the side of the ultrasonic reflector 35 away from the liquid storage chamber 221 to be in contact with air. Specifically, one side of the ultrasonic reflector 35 facing the interior of the liquid storage chamber 221 is in contact with the cleaning liquid, and the other side of the ultrasonic reflector 35 facing the exterior of the liquid storage chamber 221 is in contact with the air. There are significant acoustic impedance differences and thus a good ultrasonic reflection effect at the interface between the ultrasonic reflector 35 and the cleaning liquid and the interface between the ultrasonic reflector 35 and the air, so that the ultrasonic reflector 35 can reflect more ultrasonic waves back into the cleaning liquid, thus improving the cleaning effect of the pipette needle 4.

The ultrasonic reflector 35 may have a solid structure or a hollow structure.

Exemplarily, the ultrasonic reflector 35 has a hollow chamber containing gas. That is, the hollow chamber forms an air interlayer. The air interlayer may enhance the ultrasonic reflection effect of the ultrasonic reflector. Therefore, no matter whether the ultrasonic reflector 35 is completely arranged inside the liquid storage chamber 221 or is installed in the first installation port 33 described above, an excellent ultrasonic reflection effect can be realized.

Exemplarily, an acoustic impedance value of a material of the ultrasonic reflector 35 is greater than or equal to twice of an acoustic impedance value of the cleaning liquid. Therefore, when the ultrasonic wave is transferred from the cleaning liquid to the cleaning liquid and the ultrasonic reflecting surface 351, an excellent ultrasonic reflection effect can be realized at the interface of the ultrasonic reflecting surface 351.

The ultrasonic reflector 35 is made of a material of, for example, metal.

Exemplarily, the tank walls of the cleaning tank are made of a material of plastic, and the ultrasonic reflector is made of the material of metal. The material of the plastic is not easy to generate noise during ultrasonic vibration, and can effectively reduce the noise during cleaning of the cleaning tank 22. Furthermore, the ultrasonic reflector 35 made of the material of metal exhibits an excellent ultrasonic reflection effect. Therefore, in this embodiment, noise can be reduced while ensuring the ultrasonic cleaning effect.

Exemplarily, a second installation port 34 is arranged on one of the tank walls, the vibration end of the vibration part 212 away from the ultrasonic transducer 211 is inserted into the liquid storage chamber 221 through the second installation port 34, and a seal is arranged at the second installation port 34. The seal is configured to seal the gap between the second installation port 34 and the ultrasonic transducer 211, and reduce a probability that the cleaning liquid leaks from the second installation port 34. In this embodiment, the vibration part 212 is not inserted into the liquid storage chamber 221 from the opening, so that the vibration part 212 can be completely or mostly submerged in the cleaning liquid, and the fogging phenomenon at the liquid level of the cleaning liquid in the related art is improved.

The shape of the end surface 212a of the vibration end is not limited. The end surface 212a of the vibration end may be a planar surface, or may be a concave surface.

Exemplarily, in some embodiments, the end surface 212a of the vibration end is the planar surface. For example, the shape of the end surface 212a of the vibration end includes one of a rectangle, an ellipse, or a waist shape. For example, in an embodiment where the shape of the end surface 212a of the vibration end of the vibration part 212 is the rectangle, long sides of the rectangle may be arranged substantially in a vertical direction, and short sides of the rectangle may be arranged substantially in s horizontal direction. For another example, in an embodiment where the end surface 212a of the vibration end is an ellipse, a major axis of the ellipse may be arranged substantially in the vertical direction, and a minor axis of the ellipse may be arranged substantially in the horizontal direction. For yet another example, in an embodiment where the end surface 212a of the vibration end is a waist shape, a major axis of the waist shape may be arranged substantially in the vertical direction, and a minor axis of the waist shape may be arranged substantially in the horizontal direction.

It should be noted that the waist shape refers to a closed figure formed by dividing a circle into two equal semicircular arcs through the center of the circle and translating the two equal semicircular arcs in opposite directions, and connecting the endpoints of the two semicircular arcs with two equal-length parallel lines.

In other embodiments, the end surface 212a of the vibration end is a concave surface. In these embodiments, the end surface has the function of focusing the ultrasonic wave, which allows the ultrasonic wave to propagate more intensively towards the cleaning channel 31, concentrates the sound field energy in the cleaning channel 31, and improves the cleaning effect.

The specific shape of the concave surface is not limited.

For example, in some embodiments, the concave surface is a spherical segment, or a V-shaped surface, or a U-shaped surface, or a C-shaped surface. Herein, the spherical segment is a remaining part of a spherical surface after being cut by a plane, and the spherical segment is a part of the spherical surface.

In an embodiment, the ultrasonic reflecting surface 351 of the ultrasonic reflector 35 is a planar surface. The ultrasonic reflecting surface 351 has a planar shape.

In an embodiment, the ultrasonic reflecting surface 351 of the ultrasonic reflector 35 is recessed toward a side away from the vibration part. In this embodiment, the ultrasonic reflecting surface 351 of the ultrasonic reflector 35 has the function of focusing the ultrasonic wave, which allows the ultrasonic wave to propagate more intensively towards the cleaning channel 31, concentrates the sound field energy in the cleaning channel 31, and improves the cleaning effect.

In an embodiment, the specific shape of the concave surface is not limited.

For example, in some embodiments, the ultrasonic reflecting surface 351 of the ultrasonic reflector 35 is the spherical segment, or the V-shaped surface, or the U-shaped surface, or the C-shaped surface. Herein, the spherical segment is a remaining part of a spherical surface after being cut by a plane, and the spherical segment is a part of the spherical surface.

In an embodiment, referring to FIG. 1 to FIG. 5, a minimum width w of an interval between the end surface 212a of the vibration end and the ultrasonic reflecting surface 351 of the ultrasonic reflector 35 is greater than or equal to 4 mm, i.e., w ≥ 4 mm. That is, in a direction of the end surface toward the ultrasonic reflecting surface 351, the minimum width of the cleaning channel 31 is 4 mm. In this way, the pipette needle 4 may be inserted smoothly into the cleaning channel 31, the needle is not easily striked, and the requirement for positioning accuracy of the pipette needle 4 is reduced.

In some embodiments, w is 4 mm to 10 mm. This width enables the pipette needle 4 to be smoothly inserted into the cleaning channel 31 without being oversized, which facilitates a compact structure of the cleaning tank 22 and helps reduce the use amount of the cleaning liquid.

Exemplarily, referring to FIG. 1 to FIG. 5, a distance h between an upper edge of the end surface 212a of the vibration end and a bottom of the cleaning tank below the cleaning channel 31 is no less than 20 mm, i.e., h ≥ 20 mm. In this way, a length with at least 20 mm of the pipette needle 4 passes through the ultrasonic cleaning in the cleaning channel 31. Specifically, as shown in the drawings, a tip of the pipette needle 4 first enters into the cleaning channel 31, and as the pipette needle 4 gradually moves downwards, a total length of the pipette needle 4 passing through the cleaning channel 31 is no less than 20 mm, so that at least the cleaning needs of the tip of the pipette needle 4 and the part near the tip may be met.

It may be understood that the cleaning needs of the tip of the pipette needle 4 and the part near the tip are largest, and an end of the pipette needle 4 close to the movement component generally does not need to contact samples, reagents, etc., and therefore, the cleaning need of the end of the pipette needle 4 close to the movement component is little or no cleaning is needed.

Exemplarily, the distance h between the upper edge of the end surface 212a of the vibration end and the bottom of the cleaning tank below the end surface 212a of the vibration end is 20 mm to 100 mm, for example, 20 mm, 26 mm, 30 mm, 34 mm, 40 mm, 45 mm, 50 mm, 60 mm, 70 mm, 80 mm, 90 mm, 100 mm, etc. When the pipette needle aspirates a whole blood sample, it needs to descend to a deeper part of the sample tube to aspirate the sample, resulting in the contamination height of the outer surface of the needle being relatively high. Therefore, when the distance between the upper edge of the end surface 212a of the vibration end and the bottom of the cleaning tank below the end surface 212a of the vibration end is no less than 20 mm, the contamination caused by aspirating the whole blood sample can be cleaned. Preferably, the distance between the upper edge of the end surface 212a of the vibration end and the bottom of the cleaning tank below the end surface 212a of the vibration end is no less than 40 mm, and more preferably, no less than 60 mm. In the art, a length of the pipette needle is generally not too long, when a distance of the upper edge of the end surface 212a of the vibration end and the bottom of the cleaning tank below the end surface 212a of the vibration end is 100 mm, the outer surface of the needle can be cleaned better, and the cleaning liquid will not be wasted due to the depth of the cleaning tank.

Exemplarily, the distance h between the upper edge of the end surface 212a of the vibration end and the bottom of the cleaning tank below the end surface 212a of the vibration end is no less than 60 mm. That is, 60 mm ≤ h ≤ 100 mm, for example, 70 mm, 80 mm, 90 mm, 100 mm, etc. If the distance is too large, which far exceeds the length of various types of the pipette needle 4, on the one hand, the size is too large, which is not conducive to compactness, and on the other hand, it would cause a waste of the cleaning liquid.

In some embodiments, the distance between the upper edge of the end surface 212a of the vibration end and the bottom of the cleaning tank below the end surface 212a of the vibration end is no greater than 100 mm, that is, 60 mm ≤ h ≤ 100 mm, for example, 60 mm, 70 mm, 80 mm, 90 mm, 100 mm, etc.

Exemplarily, referring to FIG. 1 to FIG. 5, bottoms of the tank walls include a first bottom 2215 and a second bottom 2214, the first bottom 2215 is higher than the second bottom 2214, and the second bottom 2214 is below the cleaning channel 31. For example, the bottoms of the cleaning tank have a stepped structure. A depth of a part of the liquid storage chamber 221 above the first bottom 2215 is smaller than a depth of a part of the liquid storage chamber 221 above the second bottom 2214. During ultrasonic cleaning, the pipette needle 4 is cleaned in the area above the second bottom 2214, so that the depth of the area above the second bottom 2214 may meet the cleaning depth requirement of the pipette needle 4, and the design of the raised first bottom 2215 may reduce the volume of the liquid storage chamber 221 and the use amount of cleaning liquid while meeting the cleaning requirement of the pipette needle 4.

In other embodiments, referring to FIG. 1 to FIG. 5, the bottoms of the liquid storage chamber 221 may be designed without any raised part, maintaining a flat bottom.

The vibration part 212 may be arranged horizontally or inclined relative to the horizontal plane.

In some embodiments, referring to FIG. 1 to FIG. 5, the vibration part 212 may be arranged horizontally. In other embodiments, referring to FIG. 1 to FIG. 5, the vibration end may be inclined upward. In some embodiments not shown, the vibration end may further be inclined downward.

Exemplarily, any part of the vibration part 212 does not exceed the liquid level when overflow occurs in the liquid storage chamber 221. The liquid level during overflow is a designed highest liquid level of the liquid storage chamber 221, that is, a theoretical maximum value of the liquid level of the liquid storage chamber 221 is the liquid level during overflow. It should be noted that in actual use, the liquid level in the liquid storage chamber 221 may be at the liquid level during overflow, or may be lower than the liquid level during overflow.

In this embodiment, the vibration part 212 may be substantially or mostly submerged in the cleaning liquid, in this way, the fogging phenomenon on the liquid surface may be further improved or avoided.

Exemplarily, referring to FIG. 1 to FIG. 5, the cleaning tank 22 further includes a first overflow chamber 222 configured to hold the cleaning liquid overflowed from the liquid storage chamber 221.

When the liquid pathway support mechanism continuously injects liquid into the liquid storage chamber 221 and reaches the overflow liquid level of the liquid storage chamber 221, the excess cleaning liquid overflows into the first overflow chamber 222 without spreading to any part outside the cleaning tank 22.

Exemplarily, referring to FIG. 1 to FIG. 5, the first overflow chamber 222 is arranged with second discharge ports 222a, 223a configured to discharge the cleaning liquid in the first overflow chamber 222.

It should be noted that, in some embodiments, the second discharge ports 222a, 223a may be in a normally open state, that is, the cleaning liquid may be discharged from the second discharge ports 222a, 223a at any time as long as the cleaning liquid enters the first overflow chamber 222. In other embodiments, a control valve is arranged at the second discharge ports 222a, 223a, or the control valve is arranged on a pipeline connected to the second discharge ports 222a, 223a. When the liquid level in the first overflow chamber 222 reaches a certain height, the control valve may be opened to centrally discharge the cleaning liquid in the first overflow chamber 222.

Exemplarily, referring to FIG. 1 to FIG. 5, the cleaning tank 22 includes a second overflow chamber 223 configured to receive the cleaning liquid leaked from the second installation port 34. It should be noted that after the vibration part 212 passes through the second installation port 34, it is necessary to seal between the vibration part 212 and the second installation port 34, and in a normal product design, the cleaning liquid does not leak from the connection between the second installation port 34 and the vibration part 212. However, leakage may occur at the second installation port 34, therefore, in an embodiment of the present invention, the second overflow chamber 223 may receive the cleaning liquid leaked from the second installation port 34, preventing the leakage from spreading to other parts outside the cleaning tank 22.

Exemplarily, referring to FIG. 1 to FIG. 5, the second overflow chamber 223 is arranged with the second discharge ports 222a, 223a configured to discharge the cleaning liquid in the second overflow chamber 223.

In some embodiments, the first overflow chamber 222 and the second overflow chamber 223 may be isolated from each other, that is, the first overflow chamber 222 and the second overflow chamber 223 do not communicate with each other, the cleaning liquid in the first overflow chamber 222 would not flow to the second overflow chamber 223, and the cleaning liquid in the second overflow chamber 223 would not flow to the first overflow chamber 222.

In other embodiments, the first overflow chamber 222 and the second overflow chamber 223 are in communication with each other, so that both may discharge the cleaning liquid through the same second discharge ports 222a, 223a.

Exemplarily, referring to FIG. 1 to FIG. 5, the tank walls include a first side wall 2211, a second side wall 2212, and two third side walls 2213. The first side wall 2211 and the second side wall 2212 are on opposite sides of the liquid storage chamber 221, that is, the first side wall 2211 and the second side wall 2212 are opposite to each other, and the two third side walls 2213 are opposite to each other. The two third side walls 2213 are connected to the first side wall 2211 and the second side wall 2212, respectively. That is, the liquid storage chamber 221 is substantially of a cuboid shape or a cube shape.

The second installation port 34 penetrates through the first side wall 2211, and the first installation port 33 penetrates through the second side wall 2212. The vibration part 212 passes through the first side wall 2211 and extends toward the second side wall 2212.

In some embodiments, a top of at least one of the two third side walls 2213 is arranged with an overflow port 221c, and the cleaning liquid in the liquid storage chamber 221 overflows to the first overflow chamber 222 through the overflow port 221c. That is, the liquid level of the overflow depends on the height of the overflow port 221c.

In these embodiments, since the overflow port 221c is arranged on the at least one of the two third side walls 2213, when the cleaning liquid overflows from the overflow port 221c, the cleaning liquid would not flow downwards from the outer surface of the first side wall 2211, nor would the cleaning liquid flow downwards from the outer surface of the second side wall 2212, and therefore the cleaning liquid would not flow to the ultrasonic transducer 211, thereby preventing problems such as short circuiting and corrosion of electronic components of the ultrasonic transducer 211 caused by the cleaning liquid.

In some embodiments, a height of the at least one of the third side walls 2213 is lower than heights of remaining side walls of the liquid storage chamber 221, to allow the cleaning liquid in the liquid storage chamber 221 to overflow to the first overflow chamber 222 through the top of the at least one of the two third side walls 2213. Specifically, the height of the at least one of the third side walls 2213 is lower than the height of the first side wall 2211 and is also lower than the height of the second side wall 2212. In these embodiments, the top edges of the third side walls 2213 may be kept flat. Furthermore, when the cleaning liquid overflows, the cleaning liquid would not flow downwards from the outer surface of the first side wall 2211 or flow downwards from the outer surface of the second side wall 2212, and therefore the cleaning liquid would not flow to the ultrasonic transducer 211, thereby preventing problems such as short circuiting and corrosion of electronic components of the ultrasonic transducer 211 caused by the cleaning liquid.

In some embodiments, a size of the end surface 212a of the vibration end in the vertical direction is greater than a size of the end surface 212a of the vibration end in the horizontal direction. Therefore, at the same power of the ultrasonic transducer 211, the energy density of the end surface 212a of the vibration end of the vibration part 212 is greater, and the sound field has a relatively long length in the up-and-down direction of the end surface 212a of the vibration end. Therefore, when the pipette needle 4 moves up and down in the cleaning channel 31, a better cleaning effect is realized.

Exemplarily, in some embodiments, referring to FIG. 1 to FIG. 5, circumferential outer surfaces of the vibration part 212 includes a pair of sectional surfaces 212b and a pair of arc surfaces 212c, the pair of sectional surfaces 212b and the pair of arc surfaces 212c extend axially to the end surface 212a of the vibration end. The pair of sectional surfaces 212b is arranged on the surfaces of opposite sides of the vibration part 212 in the first direction and are arranged symmetrically, and the pair of arc surfaces 212c are arranged on the surfaces of opposite sides of the vibration part 212 in the second direction and are arranged symmetrically.

A sectional surface 212b may be understood as a sectional surface 212b formed after a part of surfaces of a cylinder is cut.

In these embodiments, a pair of arcs may be a concentric circle, and the distance between the pair of sectional surfaces 212b is less than a diameter of the concentric circle. A cross-sectional shape of the vibration part 212 is waist-shaped or similar to waist-shaped. Under the same power of the ultrasonic generator, the end surface has a larger power density, and the length between the pair of arcs is longer, which improves the cleaning effect of the pipette needle 4.

Exemplarily, a diameter of a circumferential circle of a circumferential surface of the vibration part 212 does not exceed 50 mm. The circumference circle of the circumferential surface of the vibration part 212 may be understood as a circumference circle corresponding to a cross section pattern of the vibration part 212 in a cross section perpendicular to a direction in which the vibration part 212 extends.

It should be noted that the vibration part 212 may be arranged with equal diameters or non-equal diameters from one end of the vibration part 212 close to the ultrasonic transducer 211 to the end surface 212a of the vibration end. For example, in some embodiments, from the end of the vibration part 212 close to the ultrasonic transducer 211 to the end surface 212a of the vibration end, the diameter of the circumferential circle of the circumferential surface of the vibration part 212 is the same, that is, the vibration part 212 is arranged with equal diameters. In other embodiments, from the end of the vibration part 212 close to the ultrasonic transducer 211 to the end surface 212a of the vibration end, the diameter of the circumferential circle of the circumferential surface of the vibration part 212 continuously decreases, or decreases with jump, etc., that is, the vibration part 212 is arranged with non-equal diameters.

Exemplarily, the whole of the vibration part 212 is symmetrical with respect to a central axis of the vibration part 212. The central axis of the vibration part 212 refers to a line connecting the center of the cross-section at any point of the vibration part 212. In this way, shear forces on any laterally opposite sides of the vibration part 212 may be relatively uniform during the vibration process, thereby improving the stress condition of the vibration part 212, and prolonging the service life of the vibration part 212.

Exemplarily, the sample analyzer includes a detection apparatus and a controller, the detection apparatus is configured to detect a liquid level of the liquid storage chamber 221 in a state where the liquid storage chamber 221 has the cleaning liquid stored therein and the liquid pathway support mechanism stops providing the cleaning liquid to the liquid storage chamber 221. The controller is configured to determine whether liquid leakage occurs for the liquid storage chamber 221 according to information of the liquid level.

In this embodiment, during the process of the detection apparatus detecting the liquid level, the liquid pathway support mechanism does not inject liquid into the liquid storage chamber 221, so that the detection apparatus can obtain the current liquid level of the liquid storage chamber 221 more accurately, thus facilitating the controller to determine whether liquid leakage occurs for the liquid storage chamber 221. For example, when the controller determines that liquid leakage occurs for the liquid storage chamber 221, a warning message may be issued to remind a user to check the sample analyzer, thereby improving the reliability of the sample analyzer.

In some specific embodiments, for example, firstly, a determined volume of cleaning liquid is quantitatively injected into the liquid storage chamber 221 through the liquid pathway support mechanism, for example, 30 milliliter (ml) or 40 ml of the cleaning liquid is injected each time, and a flow rate of the cleaning liquid is actively controlled by the liquid pathway support mechanism., the liquid level of the cleaning liquid after the injection is fixed, and the fixed liquid level information may be pre-stored in the controller, i.e., a default liquid injection level. After that, the detection apparatus detects the liquid level of the liquid storage chamber 221, and determines whether there is a liquid leakage according to a degree of difference between the default liquid injection level and the liquid level detected by the detection apparatus. For example, when there is no difference, or the difference is less than a set value, it is determined that there is no liquid leakage; and when the difference reaches or exceeds the set value, it is determined that liquid leakage occurs.

In other embodiments, the liquid level of the liquid storage chamber 221 may be detected twice by the detection apparatus, and the controller determines whether there is the liquid leakage according to a difference between the two detected liquid levels.

The specific structure of the detection apparatus is not limited.

For example, in some embodiments, the detection apparatus includes a detection circuit, the pipette needle 4 is connected to the detection circuit as a variable impedance, the movement component is further configured to drive the pipette needle 4 to be inserted into the cleaning liquid at least twice, the detection circuit is configured to detect an impedance change of the pipette needle and output an electrical signal characterizing the liquid level, and the controller is configured to determine whether liquid leakage occurs for the liquid storage chamber 221 according to the electrical signal.

In these embodiments, the pipette needle 4 is connected to the detection circuit as an impedance in a broad sense. For example, taking the pipette needle 4 as a capacitance in the detection circuit as an example, the detection circuit may calculate a current capacitance of the pipette needle 4 based on an operation voltage. When the pipette needle 4 contacts the liquid level, the capacitance of the pipette needle 4 will change greatly, causing a change in the operation voltage. In this way, the controller determines whether the pipette needle 4 contacts the liquid level according to the change of the operation voltage. At this time, a height of the tip of the sample needle is the same as a height of the liquid level of the liquid storage chamber 221. In this way, the liquid level of the liquid storage chamber 221 at this time can be determined.

In other embodiments, the detection apparatus may include a sensor disposed on the cleaning tank 22 to detect the liquid level in the liquid storage chamber 221.

The ultrasonic transducer 211 is spaced apart from the side walls of the liquid storage chamber 221, that is, any part of the ultrasonic transducer 211 is not in direct contact with the side walls of the liquid storage chamber 221, and the vibration of the ultrasonic transducer 211 is not directly transferred to the side walls of the liquid storage chamber 221.

Exemplarily, the sample analyzer includes a connection structure connected to the side walls of the liquid storage chamber 221, for example, may be connected by screws 24. The connection structure fixes the ultrasonic transducer 211 to the side walls of the liquid storage chamber 221 by a seal. The connection structure has functions of connecting and applying a force to the seal, the connection structure does not directly contact with the ultrasonic transducer 211, the connection structure applies the force to the seal, and the seal transfers the force to the ultrasonic transducer 211, thereby fixing the ultrasonic transducer 211 on the side walls of the liquid storage chamber 221.

The material of the seal is not limited. For example, materials with resilient properties such as rubber and silica gel may be used.

The shape of the connection structure is not limited, and the shape of the seal is not limited.

Exemplarily, a hole wall of the second installation port 34 is formed with an annular step surface facing the outside of the liquid storage chamber 221. Referring to FIG. 1 to FIG. 5, a convex ring 2111 is formed on the circumferential surface of the ultrasonic transducer 211, that is, the convex ring 2111 protrudes from the circumferential surface of the ultrasonic transducer 211.

Referring to FIG. 1 to FIG. 5, the seal includes a first seal ring 231 and a second seal ring 232, and the first seal ring 231 and the second seal ring 232 are arranged around the ultrasonic transducer 211 and are on opposite axial sides of the convex ring 2111. When assembling, the first seal ring 231 is arranged around the ultrasonic transducer 211 from one end of the ultrasonic transducer 211 close to the vibration part 212, and the second seal ring 232 is arranged around the ultrasonic transducer 211 from another end of the ultrasonic transducer 211 away from the vibration part 212.

The connection structure includes a flange 233, and the flange 233 is arranged around the ultrasonic transducer 211 and is spaced apart from the ultrasonic transducer 211, that is, the flange 233 and the ultrasonic transducer 211 are not in direct contact with each other.

The first seal ring 231 is sandwiched between the step surface and a surface of a first side of the convex ring 2111, and the second seal ring 232 is sandwiched between a surface of a second side of the convex ring 2111 and the flange 233, the flange 233 is connected to a side wall of the liquid storage chamber 221, and exerts a compressive force towards the liquid storage chamber 221 on the second seal ring 232, the convex ring 2111, and the first seal ring 231. In this way, the convex ring 2111 is clamped by the first seal ring 231 and the second seal ring 232, so as to implement fixed installation of the ultrasonic transducer 211, and the ultrasonic transducer 211 is neither in contact with the side wall of the liquid storage chamber 221 nor in contact with the flange 233.

Exemplarily, during the ultrasonic cleaning process, the movement component is configured to drive the pipette needle 4 to perform intermittent upward and downward movements at least twice and/or perform back-and-forth upward and downward movements at least twice in cleaning channel 31 with the cleaning liquid, to realize the ultrasonic cleaning of the pipette needle 4. In this way, the cleaning effect can be improved.

The pipette needle 4 performs an intermittent upward and downward movement in the cleaning channel 31 with the cleaning liquid, which means that after being inserted into the cleaning liquid, the pipette needle 4 stays for a short period of time, moves downward for a short distance, stays for a short period of time, then continues to move downward for a short distance, and when being inserted into the cleaning liquid at a preset depth, the pipette needle 4 moves upward for a short distance, stays for a short period of time, and then continues to move upward. That is, after moving for a short distance, the pipette needle 4 stays for a short period of time and then continues to move, and until the cleaning is completed, and then the pipette needle 4 is moved upward and out of the liquid storage chamber 221.

It may be understood that the manner of the intermittent upward and downward movement may only move upward and downward once, or may move upward and downward multiple rounds.

The back-and-forth upward and downward movements at least twice refer to alternating downward and upward movements for at least two rounds. There are two cases. In the first case, the pipette needle 4 moves continuously without stopping, and the continuous upward movement and continuous downward movement are alternated. In the second case, the pipette needle 4 moves intermittently, stays during the downward movement and stays during the upward movement, and the upward movement and downward movement are alternated.

An embodiment not being part of the present invention provides an ultrasonic cleaning apparatus 200, including an ultrasonic generator 21 and a cleaning tank 22.

The ultrasonic generator 21 includes an ultrasonic transducer 211 and a vibration part 212 connected with each other.

The cleaning tank 22 includes a liquid storage chamber 221 configured to store cleaning liquid, where the liquid storage chamber 221 is arranged with an opening, an ultrasonic reflector 35 is arranged inside the liquid storage chamber 221, the ultrasonic reflector 35 and the ultrasonic generator 21 are arranged separately, a vibration end of the vibration part 212 away from the ultrasonic transducer 211 is inserted into the liquid storage chamber 221, an end surface 212a of the vibration end faces and is spaced apart from an ultrasonic reflecting surface 351 of the ultrasonic reflector 35, and a cleaning channel 31 communicated with the opening is formed between the vibration end and the ultrasonic reflector 35, to allow a pipette needle 4 to be inserted into the cleaning channel 31 through the opening for cleaning.

For the structure and principle of the ultrasonic cleaning apparatus 200 in the present invention, the structure and principle of the ultrasonic cleaning apparatus 200 in any of the above embodiments may be referred to, which will not be repeated herein.

An embodiment not being part of the present invention further provides a sample analyzer, including a dispensing mechanism, a liquid pathway support mechanism, and an ultrasonic cleaning apparatus 200. Of course, the sample analyzer may further include a sample unit 11, a sample dispensing mechanism 12, a reagent unit 13, a reagent dispensing mechanism 14, a mixing mechanism 15, a reaction component 16, and an optical measurement component 17 as described in the above embodiments, which will not be repeated herein.

The dispensing mechanism includes a pipette needle configured to aspirate or discharge target liquid, and the target liquid includes at least one of a sample or a reagent. The dispensing mechanism may be a dispensing mechanism of any of the above embodiments, and will not be repeated herein.

The ultrasonic cleaning apparatus 200 includes an ultrasonic generator 21 and a cleaning tank 22, and the ultrasonic generator 21 includes an ultrasonic transducer 211 and a vibration part 212 connected with each other.

The cleaning tank 22 includes tank walls, the tank walls form a liquid storage chamber 221 configured to store cleaning liquid, and the liquid storage chamber 221 is arranged with an opening; a vibration end of the vibration part away from the ultrasonic transducer 211 is inserted into the liquid storage chamber 221, an ultrasonic reflecting surface 351 of the ultrasonic reflector 35 forms a part of inner surfaces of the tank walls. That is, the ultrasonic reflecting surface 351 is in direct contact with the cleaning liquid in the liquid storage chamber 221.

An end surface of the vibration end faces and is spaced apart from the ultrasonic reflecting surface 351 of the ultrasonic reflector 35, that is, the ultrasonic reflector 35 and the vibration part 212 are not in contact with each other, and a cleaning channel communicated with the opening is formed between the vibration end and the ultrasonic reflector 35, to allow the pipette needle to be inserted into the cleaning channel through the opening for cleaning.

The liquid pathway support mechanism is configured to provide the cleaning liquid to the liquid storage chamber 221.

In the present invention, since the pipette needle 4 is inserted into the cleaning channel 31 through the opening for cleaning, the ultrasonic wave emitted from the end surface 212a of the vibration end may better act on one side of the pipette needle 4 facing the end surface 212a of the vibration end, so that the side of the pipette needle 4 facing the end surface 212a of the vibration end can be better cleaned. At least part of the ultrasonic wave emitted from the end surface 212a of the vibration end is transmitted to the ultrasonic reflector 35 through the cleaning liquid, the ultrasonic reflector 35 reflects the ultrasonic wave, and the ultrasonic wave reflected by the ultrasonic reflector 35 may better act on another side of the pipette needle 4 away from the end surface 212a of the vibration end. Therefore, both surfaces of the side of the pipette needle 4 facing the end surface and of the side of the pipette needle 4 away from the end surface can be cleaned more uniformly.

In the present invention, the vibration part 212 directly transfers the ultrasonic vibration to the cleaning liquid, and no ultrasonic vibration is required on the tank walls of the cleaning tank 22. Therefore, the stress condition of the tank walls of the cleaning tank 22 can be improved, the requirements for the fatigue resistance strength and structure strength of the tank walls of the cleaning tank 22 can be reduced, and the input-output conversion efficiency of the ultrasonic wave is higher.

It should be noted that for the structure of the sample analyzer not described in the present invention, the structure of the sample analyzer of any of the above embodiments may be referred to, which will not be repeated herein.

In the description of the present invention, the description of reference terms "an embodiment", "some embodiments", "example", "specific examples", or "some examples", etc. means that specific features, structures, materials, or features described in connection with the embodiment or example are included in at least one embodiment or example of the embodiment of the present invention. In the present invention, the illustrative expressions of the above terms do not necessarily direct to the same embodiments or examples. Moreover, the specific features, structures, materials, or features described may be combined in a suitable manner in any one or more embodiments or examples. Further, those skilled in the art may combine the different embodiments or examples and the characteristics of the different embodiments or examples described in the present invention, without conflicting with each other.

The above is only preferred embodiments of the present invention, and is not intended to limit the present invention. For those skilled in the art, the present invention may be subject to various modifications and variations. The scope of protection of the invention shall be subject to the scope of protection of the claims.

## Claims

1. A sample analyzer, comprising:
a dispensing mechanism, comprising a pipette needle (4) configured to aspirate or discharge target liquid, wherein the target liquid comprises at least one of a sample or a reagent;
an ultrasonic cleaning apparatus (200), comprising an ultrasonic generator (21), a cleaning tank (22) and an ultrasonic reflector (35), wherein the ultrasonic generator (21) comprises an ultrasonic transducer (211) and a vibration part (212) connected with each other; the cleaning tank (22) comprises a liquid storage chamber (221) configured to store cleaning liquid, and the liquid storage chamber (221) is arranged with an opening; wherein the ultrasonic reflector (35) and the vibration part (212) are arranged separately, and the ultrasonic reflector (35) would not emit an ultrasonic wave to the cleaning liquid, a vibration end of the vibration part (212) away from the ultrasonic transducer (211) is inserted into the liquid storage chamber (221), an end surface (212a) of the vibration end faces and is spaced apart from an ultrasonic reflecting surface (351) of the ultrasonic reflector (35) in a first direction, to allow the ultrasonic reflecting surface (351) of the ultrasonic reflector (35) to reflect another ultrasonic wave generated by the vibration end in the first direction, and a cleaning channel (31) communicated with the opening is formed between the vibration end and the ultrasonic reflector (35) in a second direction, to allow the pipette needle (4) to be inserted into the cleaning channel (31) through the opening in the second direction for cleaning, and the first direction is perpendicular to the second direction; and the cleaning tank (22) further comprises tank walls forming the liquid storage chamber (221), one of the tank walls is arranged with a first installation port (33), the first installation port (33) penetrates through said tank wall of the liquid storage chamber (221), and the ultrasonic reflector (35) is installed in the first installation port (33), and
a liquid pathway support mechanism, configured to provide the cleaning liquid to the liquid storage chamber (221).

2. The sample analyzer of claim 1, **characterized in that**, the ultrasonic reflector (35) is installed in the first installation port (33), to allow a side of the ultrasonic reflector (35) away from the liquid storage chamber (221) to be in contact with air.

3. The sample analyzer of claim 1, **characterized in that**, the ultrasonic reflector (35) has a hollow chamber containing gas.

4. The sample analyzer of claim 1, **characterized in that**, an acoustic impedance value of a material of the ultrasonic reflector (35) is greater than or equal to twice of an acoustic impedance value of the cleaning liquid, and preferably, the tank walls of the cleaning tank (22) are made of a material of plastic, and the ultrasonic reflector (35) is made of a material of metal.

5. The sample analyzer of claim 1, **characterized in that**, the cleaning tank (22) further comprises tank walls forming the liquid storage chamber (221), one of the tank walls is arranged with a second installation port (34), the vibration end of the vibration part (212) away from the ultrasonic transducer (211) is inserted into the liquid storage chamber (221) through the second installation port (34), and a seal is arranged at the second installation port (34).

6. The sample analyzer of claim 1, **characterized in that**, the end surface (212a) of the vibration end is a planar surface; or
the end surface (212a) of the vibration end is a concave surface, and preferably, the concave surface is a V-shaped surface, or the concave surface is a U-shaped surface, or the concave surface is a C-shaped surface.

7. The sample analyzer of claim 1, **characterized in that**, the ultrasonic reflecting surface (351) of the ultrasonic reflector (35) is a planar surface; or
the ultrasonic reflecting surface (351) of the ultrasonic reflector (35) is a concave surface, and preferably, the concave surface is a V-shaped surface, or the concave surface is a U-shaped surface, or the concave surface is a C-shaped surface.

8. The sample analyzer of claim 1, **characterized in that**, a minimum width of an interval between the end surface (212a) of the vibration end and the ultrasonic reflecting surface (351) of the ultrasonic reflector (35) is greater than or equal to 4 mm.

9. The sample analyzer of claim 1, **characterized in that**, the cleaning tank (22) further comprises a first overflow chamber (222) configured to hold the cleaning liquid overflowed from the liquid storage chamber (221), and the first overflow chamber (222) is arranged with a second discharge port (222a, 223a).

10. The sample analyzer of claim 9, **characterized in that**, the cleaning tank (22) further comprises tank walls forming the liquid storage chamber (221), the tank walls comprise a first side wall (2211), a second side wall (2212), and two third side walls (2213), the first side wall (2211) and the second side wall (2212) are on opposite sides of the liquid storage chamber (221), the vibration part (212) passes through the first side wall (2211) and extends towards the second side wall (2212), the ultrasonic reflector (35) is installed on the second side wall (2212), and the two third side walls (2213) are connected to the first side wall (2211) and the second side wall (2212) respectively; a top of at least one of the two third side walls (2213) is arranged with an overflow port (221c), to allow the cleaning liquid in the liquid storage chamber (221) to overflow to the first overflow chamber (222) through the overflow port (221c); and/or, a height of at least one of the two third side walls (2213) is lower than heights of remaining side walls of the liquid storage chamber (221), to allow the cleaning liquid in the liquid storage chamber (221) to overflow to the first overflow chamber (222) through the top of the at least one of the two third side walls (2213).

11. The sample analyzer of claim 1, **characterized in that**, the cleaning tank (22) further comprises tank walls forming the liquid storage chamber (221), bottoms of the tank walls comprise a first bottom and a second bottom, the first bottom is higher than the second bottom, and the second bottom is below the cleaning channel (31).

12. The sample analyzer of claim 1, **characterized in that**, the sample analyzer further comprises a detection apparatus and a controller, the detection apparatus is configured to detect a liquid level of the liquid storage chamber (221) in a state where the liquid storage chamber (221) has the cleaning liquid stored therein and the liquid pathway support mechanism stops providing the cleaning liquid to the liquid storage chamber (221).

13. The sample analyzer of claim 12, **characterized in that**, the detection apparatus comprises a detection circuit, the pipette needle (4) is connected to the detection circuit as a variable impedance, the pipette needle (4) is configured to be inserted into the cleaning liquid at least twice sequentially, and the detection circuit is configured to detect an impedance change of the pipette needle (4) and output an electrical signal characterizing the liquid level.

14. The sample analyzer of claim 1, **characterized in that**, during an ultrasonic cleaning process, the pipette needle (4) is configured to perform intermittent upward and downward movements at least twice and/or perform back-and-forth upward and downward movements at least twice in the cleaning liquid, to realize ultrasonic cleaning of the pipette needle (4).

15. The sample analyzer of claim 1, **characterized in that**, a distance between an upper edge of the end surface (212a) of the vibration end and a bottom of the cleaning tank (22) below the cleaning channel (31) is no less than 20 mm.

## Patentansprüche

1. Ein Probenanalysegerät, das Folgendes umfasst:
einen Dosiermechanismus, der eine Pipettennadel (4) umfasst, die dazu ausgelegt ist, eine Zielflüssigkeit anzusaugen oder abzugeben, wobei die Zielflüssigkeit mindestens eine Probe oder ein Reagenz umfasst;
eine Ultraschallreinigungsvorrichtung (200), die einen Ultraschallgenerator (21) umfasst, einen Reinigungstank (22) und einen Ultraschallreflektor (35), wobei der Ultraschallgenerator (21) einen Ultraschallwandler (211) und ein Schwingungsteil (212) umfasst, die miteinander verbunden sind; wobei der Reinigungstank (22) eine Flüssigkeitsspeicherkammer (221) umfasst, die zur Speicherung von Reinigungsflüssigkeit ausgelegt ist, und die Flüssigkeitsspeicherkammer (221) mit einer Öffnung versehen ist; wobei
der Ultraschallreflektor (35) und das Schwingungsteil (212) getrennt voneinander angeordnet sind, und der Ultraschallreflektor (35) keine Ultraschallwelle an die Reinigungsflüssigkeit abgibt, wobei ein von dem Ultraschallwandler (211) abgewandtes Schwingungsende des Schwingungsteils (212) in die Flüssigkeitsspeicherkammer (221) eingesetzt ist, wobei eine Endfläche (212a) des Schwingungsendes in einer ersten Richtung einer Ultraschallreflexionsfläche (351) des Ultraschallreflektors (35) zugewandt und von dieser beabstandet ist, um es der Ultraschallreflexionsfläche (351) des Ultraschallreflektors (35) zu ermöglichen, eine weitere, von dem Schwingungsende in der ersten Richtung erzeugte Ultraschallwelle zu reflektieren, und wobei ein mit der Öffnung in Verbindung stehender Reinigungskanal (31) zwischen dem Schwingungsende und dem Ultraschallreflektor (35) in einer zweiten Richtung ausgebildet ist, um es der Pipettennadel (4) zu ermöglichen, zur Reinigung durch die Öffnung in der zweiten Richtung in den Reinigungskanal (31) eingeführt zu werden, wobei die erste Richtung senkrecht zur zweiten Richtung verläuft; und wobei der Reinigungstank (22) ferner Tankwände umfasst, die die Flüssigkeitsspeicherkammer (221) bilden, wobei eine der Tankwände mit einer ersten Installationsöffnung (33) versehen ist, wobei die erste Installationsöffnung (33) die betreffende Tankwand der Flüssigkeitsspeicherkammer (221) durchdringt und wobei der Ultraschallreflektor (35) in der ersten Installationsöffnung (33) installiert ist, und
einen Flüssigkeitsweg-Unterstützungsmechanismus, der dazu ausgebildet ist, die Reinigungsflüssigkeit der Flüssigkeitsspeicherkammer (221) zuzuführen.

2. Das Probenanalysegerät nach Anspruch 1, **dadurch gekennzeichnet, dass** der Ultraschallreflektor (35) derart in der ersten Installationsöffnung (33) installiert ist, dass eine von der Flüssigkeitsspeicherkammer (221) abgewandte Seite des Ultraschallreflektors (35) mit Luft in Kontakt steht.

3. Das Probenanalysegerät nach Anspruch 1, **dadurch gekennzeichnet, dass** der Ultraschallreflektor (35) eine gasgefüllte Hohlkammer aufweist.

4. Das Probenanalysegerät nach Anspruch 1, **dadurch gekennzeichnet, dass** ein akustischer Impedanzwert eines Materials des Ultraschallreflektors (35) größer oder gleich dem Zweifachen eines akustischen Impedanzwerts der Reinigungsflüssigkeit ist, und wobei vorzugsweise die Tankwände des Reinigungstanks (22) aus einem Kunststoffmaterial bestehen und der Ultraschallreflektor (35) aus einem Metallmaterial besteht.

5. Das Probenanalysegerät nach Anspruch 1, **dadurch gekennzeichnet, dass** der Reinigungstank (22) ferner Tankwände umfasst, die die Flüssigkeitsspeicherkammer (221) bilden, wobei eine der Tankwände mit einer zweiten Installationsöffnung (34) versehen ist, wobei das von dem Ultraschallwandler (211) abgewandte Schwingungsende des Schwingungsteils (212) durch die zweite Installationsöffnung (34) in die Flüssigkeitsspeicherkammer (221) eingesetzt ist und wobei an der zweiten Installationsöffnung (34) eine Dichtung angeordnet ist.

6. Das Probenanalysegerät nach Anspruch 1, **dadurch gekennzeichnet, dass** die Endfläche (212a) des Schwingungsendes eine ebene Fläche ist; oder
die Endfläche (212a) des Schwingungsendes eine konkave Fläche ist, wobei die konkave Fläche vorzugsweise eine V-förmige Fläche ist, oder die konkave Fläche eine U-förmige Fläche ist, oder die konkave Fläche eine C-förmige Fläche ist.

7. Das Probenanalysegerät nach Anspruch 1, **dadurch gekennzeichnet, dass** die Ultraschallreflexionsfläche (351) des Ultraschallreflektors (35) eine ebene Fläche ist; oder
die Ultraschallreflexionsfläche (351) des Ultraschallreflektors (35) eine konkave Fläche ist, wobei die konkave Fläche vorzugsweise eine V-förmige Fläche ist, oder die konkave Fläche eine U-förmige Fläche ist, oder die konkave Fläche eine C-förmige Fläche ist.

8. Das Probenanalysegerät nach Anspruch 1, **dadurch gekennzeichnet, dass** eine minimale Breite eines Abstands zwischen der Endfläche (212a) des Schwingungsendes und der Ultraschallreflexionsfläche (351) des Ultraschallreflektors (35) größer oder gleich 4 mm ist.

9. Das Probenanalysegerät nach Anspruch 1, **dadurch gekennzeichnet, dass** der Reinigungstank (22) ferner eine erste Überlaufkammer (222) umfasst, die dazu ausgebildet ist, die aus der Flüssigkeitsspeicherkammer (221) überlaufende Reinigungsflüssigkeit aufzunehmen, wobei die erste Überlaufkammer (222) mit einer zweiten Ablauföffnung (222a, 223a) versehen ist.

10. Das Probenanalysegerät nach Anspruch 9, **dadurch gekennzeichnet, dass** der Reinigungstank (22) ferner Tankwände umfasst, die die Flüssigkeitsspeicherkammer (221) bilden, wobei die Tankwände eine erste Seitenwand (2211), eine zweite Seitenwand (2212) und zwei dritte Seitenwände (2213) umfassen, wobei die erste Seitenwand (2211) und die zweite Seitenwand (2212) auf einander gegenüberliegenden Seiten der Flüssigkeitsspeicherkammer (221) angeordnet sind, wobei das Schwingungsteil (212) die erste Seitenwand (2211) durchdringt und sich zur zweiten Seitenwand (2212) hin erstreckt, wobei der Ultraschallreflektor (35) an der zweiten Seitenwand (2212) installiert ist und wobei die beiden dritten Seitenwände (2213) jeweils mit der ersten Seitenwand (2211) und der zweiten Seitenwand (2212) verbunden sind; wobei ein oberer Bereich mindestens einer der beiden dritten Seitenwände (2213) mit einer Überlauföffnung (221c) versehen ist, um es der Reinigungsflüssigkeit in der Flüssigkeitsspeicherkammer (221) zu ermöglichen, durch die Überlauföffnung (221c) in die erste Überlaufkammer (222) überzulaufen; und/oder wobei eine Höhe mindestens einer der beiden dritten Seitenwände (2213) geringer ist als die Höhen der übrigen Seitenwände der Flüssigkeitsspeicherkammer (221), um es der Reinigungsflüssigkeit in der Flüssigkeitsspeicherkammer (221) zu ermöglichen, über den oberen Rand der mindestens einen der beiden dritten Seitenwände (2213) in die erste Überlaufkammer (222) überzulaufen.

11. Das Probenanalysegerät nach Anspruch 1, **dadurch gekennzeichnet, dass** der Reinigungstank (22) ferner Tankwände umfasst, die die Flüssigkeitsspeicherkammer (221) bilden, wobei die Böden der Tankwände einen ersten Boden und einen zweiten Boden umfassen, wobei der erste Boden höher ist als der zweite Boden, und wobei der zweite Boden unterhalb des Reinigungskanals (31) liegt.

12. Das Probenanalysegerät nach Anspruch 1, **dadurch gekennzeichnet, dass** das Probenanalysegerät ferner eine Erfassungsvorrichtung und eine Steuerung umfasst, wobei die Erfassungsvorrichtung dazu ausgelegt ist, einen Flüssigkeitsstand der Flüssigkeitsspeicherkammer (221) in einem Zustand zu erfassen, in dem die Flüssigkeitsspeicherkammer (221) die darin gespeicherte Reinigungsflüssigkeit aufweist und der Flüssigkeitsweg-Unterstützungsmechanismus die Zufuhr der Reinigungsflüssigkeit zur Flüssigkeitsspeicherkammer (221) beendet hat.

13. Das Probenanalysegerät nach Anspruch 12, **dadurch gekennzeichnet, dass** die Erfassungsvorrichtung eine Erfassungsschaltung umfasst, wobei die Pipettennadel (4) als variable Impedanz mit der Erfassungsschaltung verbunden ist, wobei die Pipettennadel (4) dazu ausgebildet ist, nacheinander mindestens zweimal in die Reinigungsflüssigkeit eingeführt zu werden und wobei die Erfassungsschaltung dazu ausgebildet ist, eine Impedanzänderung der Pipettennadel (4) zu erfassen und ein elektrisches Signal auszugeben, das den Flüssigkeitsstand abbildet.

14. Das Probenanalysegerät nach Anspruch 1, **dadurch gekennzeichnet, dass** die Pipettennadel (4) während eines Ultraschallreinigungsvorgangs dazu ausgelegt ist, in der Reinigungsflüssigkeit mindestens zweimal intermittierende Aufwärts- und Abwärtsbewegungen und/oder mindestens zweimal hin- und hergehende Aufwärts- und Abwärtsbewegungen auszuführen, um eine Ultraschallreinigung der Pipettennadel (4) zu erzielen.

15. Das Probenanalysegerät nach Anspruch 1, **dadurch gekennzeichnet, dass** ein Abstand zwischen einer Oberkante der Endfläche (212a) des Schwingungsendes und einem unterhalb des Reinigungskanals (31) liegenden Boden des Reinigungstanks (22) nicht weniger als 20 mm beträgt.

## Revendications

1. Analyseur d'échantillons, comprenant :
un mécanisme de distribution, comprenant une aiguille de pipette (4) configurée pour aspirer ou distribuer du liquide cible, où le liquide cible comprend au moins l'un d'un échantillon ou d'un réactif ;
un appareil de nettoyage par ultrasons (200), comprenant un générateur d'ultrasons (21), un réservoir de nettoyage (22) et un réflecteur d'ultrasons (35), où le générateur d'ultrasons (21) comprend un transducteur à ultrasons (211) et une partie de vibrations (212) reliés l'un à l'autre ; le réservoir de nettoyage (22) comprend une chambre de stockage de liquide (221) configurée pour stocker du liquide de nettoyage, et la chambre de stockage de liquide (221) est agencée avec une ouverture ; où le réflecteur d'ultrasons (35) et la partie de vibrations (212) sont agencés séparément, et le réflecteur d'ultrasons (35) n'émettra pas une onde ultrasonore vers le liquide de nettoyage, une extrémité de vibrations de la partie de vibrations (212) à l'opposé du transducteur à ultrasons (211) est insérée dans la chambre de stockage de liquide (221), une surface d'extrémité (212a) de l'extrémité de vibrations fait face à et est espacée d'une surface reflétant les ultrasons (351) du réflecteur d'ultrasons (35) selon une première direction, pour permettre à la surface reflétant les ultrasons (351) du réflecteur d'ultrasons (35) de refléter une autre onde ultrasonore générée par l'extrémité de vibrations selon la première direction, et un canal de nettoyage (31) communiquant avec l'ouverture est formé entre l'extrémité de vibrations et le réflecteur d'ultrasons (35) selon une seconde direction, pour permettre à l'aiguille de pipette (4) d'être insérée dans le canal de nettoyage (31) par l'ouverture selon la seconde direction aux fins d'un nettoyage, et la première direction est perpendiculaire à la seconde direction ; et le réservoir de nettoyage (22) comprend en outre des parois de réservoir formant la chambre de stockage de liquide (221), l'une des parois de réservoir est agencée avec un premier orifice d'installation (33), le premier orifice d'installation (33) pénètre à travers ladite paroi de réservoir de la chambre de stockage de liquide (221), et le réflecteur d'ultrasons (35) est installé dans le premier orifice d'installation (33), et
un mécanisme de support d'acheminement de liquide, configuré pour fournir le liquide de nettoyage à la chambre de stockage de liquide (221).

2. Analyseur d'échantillons selon la revendication 1, **caractérisé en ce que** le réflecteur d'ultrasons (35) est installé dans le premier orifice d'installation (33), pour permettre à un côté du réflecteur d'ultrasons (35) à l'opposé de la chambre de stockage de liquide (221) d'être en contact avec l'air.

3. Analyseur d'échantillons selon la revendication 1, **caractérisé en ce que** le réflecteur d'ultrasons (35) présente une chambre creuse contenant du gaz.

4. Analyseur d'échantillons selon la revendication 1, **caractérisé en ce qu'**une valeur d'impédance acoustique d'un matériau du réflecteur d'ultrasons (35) est supérieure ou égale au double d'une valeur d'impédance acoustique du liquide de nettoyage, et de préférence, les parois de réservoir du réservoir de nettoyage (22) sont constituées d'un matériau de plastique, et le réflecteur d'ultrasons (35) est constitué d'un matériau de métal.

5. Analyseur d'échantillons selon la revendication 1, **caractérisé en ce que** le réservoir de nettoyage (22) comprend en outre des parois de réservoir formant la chambre de stockage de liquide (221), l'une des parois de réservoir est agencée avec un second orifice d'installation (34), l'extrémité de vibrations de la partie de vibrations (212) à l'opposé du transducteur à ultrasons (211) est insérée dans la chambre de stockage de liquide (221) par le second orifice d'installation (34), et un joint est agencé au niveau du second orifice d'installation (34).

6. Analyseur d'échantillons selon la revendication 1, **caractérisé en ce que** la surface d'extrémité (212a) de l'extrémité de vibrations est une surface plane ; ou
la surface d'extrémité (212a) de l'extrémité de vibrations est une surface concave, et de préférence, la surface concave est une surface en forme de V, ou la surface concave est une surface en forme de U, ou la surface concave est une surface en forme de C.

7. Analyseur d'échantillons selon la revendication 1, **caractérisé en ce que** la surface reflétant les ultrasons (351) du réflecteur d'ultrasons (35) est une surface plane ; ou
la surface reflétant les ultrasons (351) du réflecteur d'ultrasons (35) est une surface concave, et de préférence, la surface concave est une surface en forme de V, ou la surface concave est une surface en forme de U, ou la surface concave est une surface en forme de C.

8. Analyseur d'échantillons selon la revendication 1, **caractérisé en ce qu'**une largeur minimale d'un intervalle entre la surface d'extrémité (212a) de l'extrémité de vibrations et la surface reflétant les ultrasons (351) du réflecteur d'ultrasons (35) est supérieure ou égale à 4 mm.

9. Analyseur d'échantillons selon la revendication 1, **caractérisé en ce que** le réservoir de nettoyage (22) comprend en outre une première chambre de trop-plein (222) configurée pour contenir le liquide de nettoyage qui a débordé de la chambre de stockage de liquide (221), et la première chambre de trop-plein (222) est agencée avec un second orifice d'évacuation (222a, 223a).

10. Analyseur d'échantillons selon la revendication 9, **caractérisé en ce que** le réservoir de nettoyage (22) comprend en outre des parois de réservoir formant la chambre de stockage de liquide (221), les parois de réservoir comprennent une première paroi latérale (2211), une deuxième paroi latérale (2212), et deux troisièmes parois latérales (2213), la première paroi latérale (2211) et la deuxième paroi latérale (2212) sont sur des côtés opposés de la chambre de stockage de liquide (221), la partie de vibrations (212) passe à travers la première paroi latérale (2211) et s'étend vers la deuxième paroi latérale (2212), le réflecteur d'ultrasons (35) est installé sur la deuxième paroi latérale (2212), et les deux troisièmes parois latérales (2213) sont reliées à la première paroi latérale (2211) et à la deuxième paroi latérale (2212) respectivement ; un sommet d'au moins une des deux troisièmes parois latérales (2213) est agencé avec un orifice de trop-plein (221c), pour permettre au liquide de nettoyage dans la chambre de stockage de liquide (221) de déborder vers la première chambre de trop-plein (222) par l'orifice de trop-plein (221c) ; et/ou une hauteur d'au moins une des deux troisièmes parois latérales (2213) est inférieure à des hauteurs de parois latérales restantes de la chambre de stockage de liquide (221) pour permettre au liquide de nettoyage dans la chambre de stockage de liquide (221) de déborder vers la première chambre de trop-plein (222) par le sommet de l'au moins une des deux troisièmes parois latérales (2213).

11. Analyseur d'échantillons selon la revendication 1, **caractérisé en ce que** le réservoir de nettoyage (22) comprend en outre des parois de réservoir formant la chambre de stockage de liquide (221), des fons des parois de réservoir comprennent un premier fond et un second fond, le premier fond est plus haut que le second fond, et le second fond est en dessous du canal de nettoyage (31).

12. Analyseur d'échantillons selon la revendication 1, **caractérisé en ce que** l'analyseur d'échantillons comprend en outre un appareil de détection et une unité de commande, l'appareil de détection est configuré pour détecter un niveau de liquide de la chambre de stockage de liquide (221) dans un état où la chambre de stockage de liquide (221) a le liquide de nettoyage stocké en son sein et le mécanisme de support d'acheminement de liquide arrête de fournir le liquide de nettoyage à la chambre de stockage de liquide (221).

13. Analyseur d'échantillons selon la revendication 12, **caractérisé en ce que** l'appareil de détection comprend un circuit de détection, l'aiguille de pipette (4) est reliée au circuit de détection comme une impédance variable, l'aiguille de pipette (4) est configurée pour être insérée dans le liquide de nettoyage au moins deux fois de suite, et le circuit de détection est configuré pour détecter un changement d'impédance de l'aiguille de pipette (4) et fournir un signal électrique caractérisant le niveau de liquide.

14. Analyseur d'échantillons selon la revendication 1, **caractérisé en ce que**, durant un processus de nettoyage par ultrasons, l'aiguille de pipette (4) est configurée pour effectuer des déplacements vers le haut et vers le bas intermittents au moins deux fois et/ou effectuer des déplacements vers le haut et vers le bas en va-et-vient au moins deux fois dans le liquide de nettoyage, pour réaliser un nettoyage par ultrasons de l'aiguille de pipette (4).

15. Analyseur d'échantillons selon la revendication 1, **caractérisé en ce qu'**une distance entre un bord supérieur de la surface d'extrémité (212a) de l'extrémité de vibrations et un fond du réservoir de nettoyage (22) en dessous du canal de nettoyage (31) est non inférieure à 20 mm.
